# EUROPEAN PATENT SPECIFICATION

(11) **EP 3 663 934 B1**
(45) Date of publication and mention of the grant of the patent: **12.01.2022**
(21) Application number: 18841434.6
(22) Date of filing: 20.06.2018
(51) Int. Cl.: G06F 16/00, G06F 13/00

(54) **DATA GENERATION APPARATUS, DATA GENERATION METHOD, AND PROGRAM**
DATENERZEUGUNGSVORRICHTUNG, DATENERZEUGUNGSVERFAHREN UND PROGRAMM
APPAREIL DE GÉNÉRATION DE DONNÉES, PROCÉDÉ DE GÉNÉRATION DE DONNÉES, ET PROGRAMME

(30) Priority: 02.08.2017 JP 2017149978; 28.11.2017 JP 2017228186
(43) Date of publication of application: 10.06.2020
(73) Proprietor: Omron Corporation, Kyoto-shi, Kyoto 600-8530 (JP)
(72) Inventor: YAMATO, Tetsuji, Kizugawa-shi Kyoto 619-0283 (JP)
(74) Representative: Hoffmann Eitle
(86) International application number: PCT/JP2018/023420
(87) International publication number: WO 2019/026454

(56) References cited:
- WO-A1-2017/094442
- WO-A1-2017/104287
- JP-A- 2007 122 643
- JP-A- 2013 172 247
- JP-A- 2015 226 102
- HOYOUNG JEUNG ET AL: "Effective Metadata Management in Federated Sensor Networks", SENSOR NETWORKS, UBIQUITOUS, AND TRUSTWORTHY COMPUTING (SUTC), 2010 IEEE INTERNATIONAL CONFERENCE ON, IEEE, PISCATAWAY, NJ, USA, 7 June 2010 (2010-06-07), pages 107-114, XP031704945, ISBN: 978-1-4244-7087-7

## Description

### FIELD

The present invention relates to a data generation apparatus, a data generation method, and a program.

### BACKGROUND

Japanese Unexamined Patent Application Publication No. 2014-153797 (Patent Literature 1) describes a sensor network including a virtual sensor. The virtual sensor analyzes and processes sensing data obtained by other sensors (e.g., real sensors), and outputs the resultant data as new sensing data. In this sensor network, metadata about the virtual sensor (attribute information for identifying the virtual sensor) is entered into a virtual sensor master database (DB) (refer to Patent Literature 1).

Non Patent Literature 1 relates to a framework that allows effective sensor data and metadata management based on real-time metadata creation and join processing over federated sensor networks.

### CITATION LIST

Non Patent Literature 1: "HOYOUNG JEUNG ET AL: "Effective Metadata Management in Federated Sensor Networks", SENSOR NETWORKS, UBIQUITOUS, AND TRUSTWORTHY COMPUTING (SUTC), 2010 IEEE INTERNATIONAL CONFERENCE ON, IEEE, PISCATAWAY, NJ, USA, XP031704945.

### PATENT LITERATURE

Patent Literature 1: Japanese Unexamined Patent Application Publication No. 2014-153797

### SUMMARY

### TECHNICAL PROBLEM

A virtual sensor receives sensing data input from real sensors. Thus, metadata about the virtual sensor is affected by metadata about the real sensors that each output sensing data to the virtual sensor. In other words, the metadata about the virtual sensor is to avoid inconsistency with the metadata about the real sensors. Thus, the metadata about the virtual sensor is generated to reflect the metadata about the real sensors. However, Patent Literature 1 describes no specific method for generating metadata about the virtual sensor.

In response to the above issue, one or more aspects of the present invention are directed to a data generation apparatus, a data generation method, and a program for generating appropriate metadata to be associated with a virtual sensor.

### SOLUTION TO PROBLEM

In response to the above issue, the sensor management unit, method, and program according to one or more aspects of the present invention have the structure described below.

More specifically, a data generation apparatus according to one aspect of the present invention generates first metadata to be associated with a virtual sensor. The virtual sensor receives input sensing data obtained by a real sensor sensing a target and outputs new sensing data. The data generation apparatus includes an obtaining unit that obtains second metadata about the real sensor, a reception unit that receives tentatively input first metadata from a user, a determination unit that determines consistency between the first metadata tentatively input through the reception unit and the second metadata obtained by the obtaining unit, and a generation unit that generates final first metadata based on a determination result obtained by the determination unit.

The data generation apparatus determines the consistency between the tentatively input first metadata (metadata about the virtual sensor) and the second metadata (metadata about the real sensor), and thus can generate final first metadata based on the determination result. The data generation apparatus determines the consistency between the first metadata and the second metadata before generating the first metadata, and thus generates the first metadata consistent with the second metadata.

In the data generation apparatus according to the above aspect, the reception unit may receive information for a predefined input item to receive the tentatively input first metadata.

The data generation apparatus has predefined input items for tentatively inputting the first metadata. This facilitates a user to tentatively input the first metadata.

The data generation apparatus according to the above aspect may further include an output unit that outputs a screen to receive the tentatively input first metadata. The screen may include the input item.

In this data generation apparatus, the output unit outputs the screen containing such input items. This facilitates a user to tentatively input the first metadata while viewing the input items.

The data generation apparatus according to the above aspect may further include a transmission unit that transmits data to an external device located external to the data generation apparatus. The external device may store the second metadata. The transmission unit may transmit the first metadata generated by the generation unit to the external device. The external device may receive and store the first metadata.

This data generation apparatus stores the generated first metadata (metadata about the virtual sensor) into the external device. The first metadata once generated can be used to facilitate subsequent selection of the virtual sensor associated with the first metadata.

In the data generation apparatus according to the above aspect, the first metadata transmitted by the transmission unit may have identification information indicating that the first metadata is metadata about the virtual sensor.

This data generation apparatus generates the first metadata having the identification information (identification information indicating that the first metadata is metadata about the virtual sensor). This allows differentiation between the first metadata and the second metadata.

In the data generation apparatus according to the above aspect, the first metadata transmitted by the transmission unit may have identification information indicating that the first metadata is metadata about sensing data output by the virtual sensor.

This data generation apparatus generates the first metadata having the identification information (identification information indicating that the first metadata is metadata about sensing data output by the virtual sensor). This allows differentiation between the first metadata and the second metadata.

A data generation method according to another aspect of the present invention is a data generation method for generating first metadata to be associated with a virtual sensor. The virtual sensor receives input sensing data obtained by a real sensor sensing a target and outputs new sensing data. The method includes obtaining by an obtaining unit second metadata about the real sensor, receiving by a reception unit tentatively input first metadata, determining by a determination unit consistency between the tentatively input first metadata and the obtained second metadata, and generating by a generation unit final first metadata based on a determination result obtained in determining the consistency.

This data generation method determines the consistency between the tentatively input first metadata and the second metadata, and generates the final first metadata based on the determination result. This data generation method determines the consistency between the first metadata and the second metadata before generating the first metadata, and thus can generate the first metadata consistent with the second metadata.

A program according to another aspect of the present invention causes a computer to generate first metadata to be associated with a virtual sensor. The virtual sensor receives input sensing data obtained by a real sensor sensing a target and outputs new sensing data. The program causes the computer to implement obtaining second metadata about the real sensor, receiving tentatively input first metadata from a user, determining consistency between the tentatively input first metadata and the obtained second metadata, and generating final first metadata based on a determination result obtained in determining the consistency.

This program determines the consistency between the tentatively input first metadata and the second metadata, and generates the final first metadata based on the determination result. This program determines the consistency between the first metadata and the second metadata before generating the first metadata, and thus can generate the first metadata consistent with the second metadata.

### ADVANTAGEOUS EFFECTS

The data generation apparatus, the data generation method, and the program according to the aspects of the present invention generate appropriate metadata to be associated with a virtual sensor.

### BRIEF DESCRIPTION OF THE DRAWINGS

Fig. 1 is a diagram of a sensor network system.
Fig. 2A is a diagram showing example attribute items of a virtual sensor implementable by a second server.
Fig. 2B is a diagram showing example attribute information about the virtual sensor implementable by the second server.
Fig. 3 is a diagram of the second server showing its example hardware configuration.
Fig. 4 is a diagram of an example virtual sensor class library.
Fig. 5 is a diagram of a control unit showing its example functional configuration.
Fig. 6 is a diagram of a virtual sensor metadata generation simulator showing its example detailed functional configuration.
Fig. 7 is a diagram showing an example screen to appear on a user terminal monitor after a virtual sensor class is selected.
Fig. 8 is a diagram of an example data map of a real sensor metadata database (DB).
Fig. 9 is a diagram showing an example screen for selecting real sensors that output sensing data to a virtual sensor.
Fig. 10 is a diagram showing an example screen to appear on the user terminal monitor after input sensors are selected.
Fig. 11 is a diagram showing an example screen to appear on the user terminal after a calculation start button is pressed.
Fig. 12 is a diagram of an example virtual sensor instance table.
Fig. 13 is a flowchart showing a specific procedure for simulating metadata about the virtual sensor.
Fig. 14 is a flowchart showing a specific procedure in step S9 in Fig. 13.

### DETAILED DESCRIPTION

### 1. Example Use

One or more embodiments of the present invention (hereafter, the present embodiment) will now be described in detail with reference to the drawings. The same or corresponding components in the figures are given the same reference numerals, and will not be described repeatedly. The present embodiment described below is a mere example of the present invention in any aspect. The present embodiment may be variously modified or altered within the scope of the present invention. More specifically, the present invention may be implemented as appropriate using any configuration specific to each embodiment.

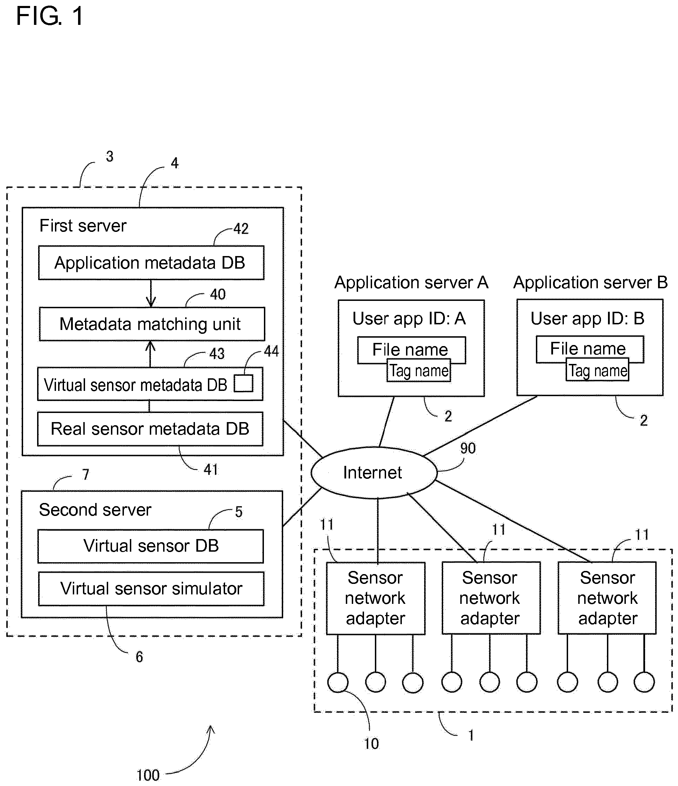

Fig. 1 is a diagram describing one implementation of the present invention used in one example situation (a sensor network system 100). In the sensor network system 100, sensing data generated by a sensing device, such as a real sensor or a virtual sensor (described later), can be distributed from a data provider to a data user.

As shown in Fig. 1, the sensor network system 100 includes a sensor network unit 1, application servers 2, and a management system 3. The sensor network unit 1, the application servers 2, and the management system 3 are connected to one another through the Internet 90 to allow communication between them. The sensor network system 100 may include either more or fewer components (including the application servers 2, sensor network adapters 11, and real sensors 10) than the components shown in Fig. 1.

In the sensor network system 100, for example, the management system 3 implementing a virtual sensor or the sensor network unit 1 (real sensors 10) serves as a data provider, and each application server 2 serves as a data user. A virtual sensor refers to, for example, a virtually created sensor that receives input sensing data generated by one or more sensors (e.g., real sensors 10), and outputs new sensing data. The present embodiment focuses on distribution of sensing data generated by the virtual sensor.

The sensor network unit 1 includes, for example, multiple sensor network adapters 11. Each sensor network adapter 11 is connected to multiple real sensors 10. The real sensors 10 are connected to the Internet 90 through each sensor network adapter 11.

Each real sensor 10 senses a target to provide sensing data. Each real sensor 10 may be an image sensor (camera), a temperature sensor, a humidity sensor, an illumination sensor, a force sensor, a sound sensor, a radio frequency identification (RFID) sensor, an infrared sensor, a posture sensor, a rain sensor, a radiation sensor, or a gas sensor. Each real sensor 10 may be any other sensor. Each real sensor 10 may be a stationary sensor, or a mobile sensor, such as a mobile phone, a smartphone, or a tablet. Each real sensor 10 may be a single sensing device, or may include multiple sensing devices. The real sensors 10 may be installed for any purposes. For example, the real sensors 10 may be installed for factory automation (FA) and production management at a factory, urban traffic control, weather or other environmental measurement, healthcare, or crime prevention.

In the sensor network unit 1, the sensor network adapters 11 are located at different sites (remote from one another), and the real sensors 10 connected to each sensor network adapter 11 are located at the same site (or close sites). The sensor network adapters 11 and the real sensors 10 may be located in a different manner.

Each application server 2 executes an application that uses sensing data, and is implemented by, for example, a general-purpose computer. The application server 2 obtains sensing data for use through the Internet 90. Each application server 2 according to the present embodiment may operate as a data user in the sensor network system 100 as described above.

The management system 3 includes a first server 4 and a second server 7. The first server 4 enables distribution of sensing data in the sensor network system 100. Although described in detail later, the first server 4 may perform matching (a search for a data provider satisfying a request from a data user) for a data provider and a data user in the sensor network system 100. The second server 7 implements a virtual sensor. Although described in detail later, the second server 7 may implement a virtual sensor that receives input sensing data generated by one or more real sensors 10, and outputs new sensing data. The second server 7 corresponds to a data generation apparatus in an aspect of the present invention.

The first server 4 includes a real sensor metadata database (DB) 41, an application metadata DB 42, a virtual sensor metadata DB 43, and a metadata matching unit 40. To enable distribution of sensing data, a provider data catalog (DC) is preliminarily entered into the real sensor metadata DB 41 and the virtual sensor metadata DB 43, and a user DC is preliminarily entered into the application metadata DB 42.

A user DC indicates the attributes of a sensor to be used by a data user (e.g., the application server 2). A provider DC indicates the attributes of a data provider (e.g., the real sensor 10) that provides sensing data to an external device (e.g., the application server 2). For example, a provider DC indicating the attributes of a real sensor 10 that provides sensing data to an external device is entered into the real sensor metadata DB 41. For example, a provider DC indicating the attributes of a virtual sensor that provides sensing data to an external device is entered into the virtual sensor metadata DB 43. The virtual sensor metadata DB 43 includes a virtual sensor instance table 44 (described later).

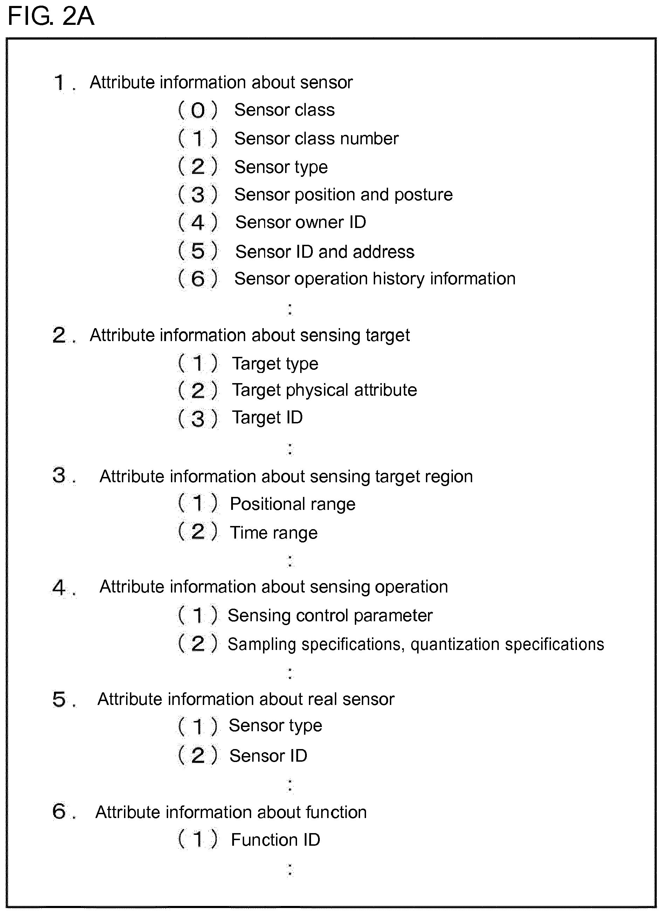

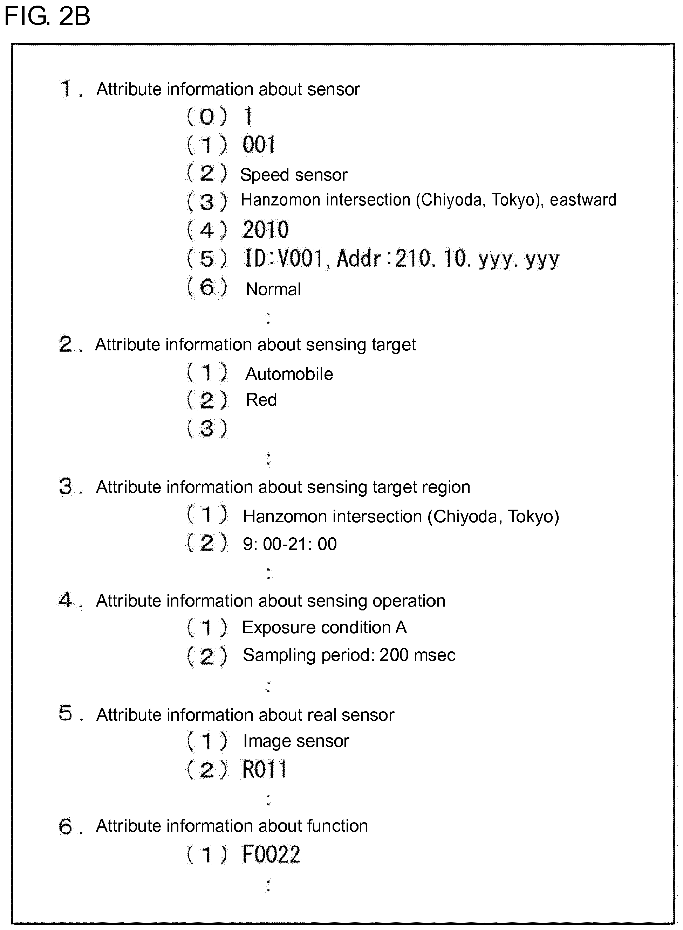

Fig. 2A is a diagram showing example attribute items of a virtual sensor implementable by the second server 7. Fig. 2B is a diagram showing example attribute information about the virtual sensor implementable by the second server 7. As shown in Fig. 2A, the attribute items of the virtual sensor include a sensor class, a sensor class number, a sensor type, and a sensor position and posture. In the example shown in Fig. 2B, the sensor class is 1, the sensor class number is 001, the sensor type is a speed sensor, and the sensor position and posture is Hanzomon intersection (Chiyoda, Tokyo), eastward. For example, a provider DC for a virtual sensor contains some or all of the items shown in Fig. 2B.

Referring back to Fig. 1, the metadata matching unit 40 transmits a data flow control command to a real sensor 10 when determining, by referring to the real sensor metadata DB 41 and the application metadata DB 42, that a provider DC satisfies a request from the user DC or satisfies a request associated with the attributes of sensing data to be used by the application server 2. The data flow control command causes sensing data to be distributed from the data provider to the data receiver.

When the real sensor metadata DB 41 contains no provider DC satisfying a request from the user DC, the metadata matching unit 40 refers to the virtual sensor metadata DB 43 and the application metadata DB 42. The metadata matching unit 40 then transmits a data flow control command to the second server 7 when determining that the virtual sensor metadata DB 43 contains a provider DC satisfying a request from the user DC entered in the application metadata DB 42.

The second server 7 includes a virtual sensor DB 5 and a virtual sensor simulator 6. The virtual sensor DB 5 stores information used for generating a virtual sensor (e.g., a virtual sensor class library 54, described later). The virtual sensor DB 5 will be described in detail later.

The virtual sensor simulator 6 simulates a virtual sensor before the virtual sensor is actually created. The virtual sensor simulator 6 simulates a virtual sensor as well as metadata about the virtual sensor (e.g., information contained in a provider DC that can be entered into the virtual sensor metadata DB 43). In creating a virtual sensor, for example, the virtual sensor simulator 6 receives metadata about the virtual sensor tentatively input by a virtual sensor definer, and simulates metadata based on the tentatively input metadata.

The virtual sensor receives sensing data input from one or more real sensors 10. Thus, metadata about the virtual sensor is affected by metadata about the real sensors 10 (hereafter also referred to as input sensors) that each output sensing data to the virtual sensor. To maintain the reliability of sensing data generated by the virtual sensor, metadata about the virtual sensor is to be consistent with metadata about the real sensors 10. Thus, the metadata about the virtual sensor is to be generated to reflect the metadata about the real sensors 10.

The virtual sensor simulator 6 according to the present embodiment determines, in simulating metadata about the virtual sensor, the consistency between metadata tentatively input by the virtual sensor definer, or first metadata, and metadata about the real sensors 10 (input sensors) that each output sensing data to the virtual sensor, or second metadata. The virtual sensor simulator 6 then generates final metadata based on the determination result.

The second server 7 according to the present embodiment determines, in simulating the virtual sensor, the consistency between metadata tentatively input by the virtual sensor definer and metadata about input sensors (real sensors 10). This enables generation of metadata about the virtual sensor consistent with metadata about the input sensors. An example configuration and an example operation of the second server 7 implementing the virtual sensor will now be described sequentially.

### 2. Example Configuration

### 2-1. Hardware Configuration of Second Server

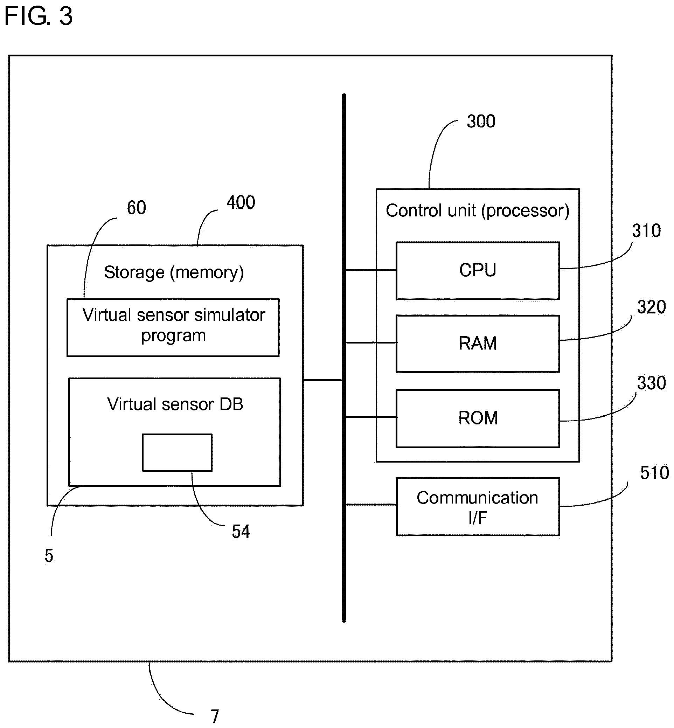

Fig. 3 is a diagram of the second server 7 showing its example hardware configuration. The second server 7 according to the present embodiment is implemented by a general-purpose computer.

As shown in Fig. 3, the second server 7 includes a control unit 300, a communication interface (I/F) 510, and a storage 400. The components are electrically connected to one another with a bus 350.

The control unit 300 includes, for example, a central processing unit (CPU) 310, a random access memory (RAM) 320, and a read only memory (ROM) 330. The control unit 300 controls each unit in accordance with intended information processing. The control unit 300 will be described in detail later.

The communication I/F 510 communicates with external devices external to the second server 7 (e.g., the first server 4, the application server 2, and the sensor network unit 1) through the Internet 90. The communication I/F 510 includes, for example, a wired local area network (LAN) module and a wireless LAN module.

The storage 400 is an auxiliary storage device such as a hard disk drive or a solid state drive. The storage 400 stores, for example, a virtual sensor simulator program 60 and the virtual sensor DB 5.

The virtual sensor simulator program 60 is a control program for the second server 7 executable by the control unit 300. The virtual sensor simulator program 60 simulates a virtual sensor before the virtual sensor is actually created. The processing performed by the control unit 300 in accordance with the virtual sensor simulator program 60 will be described in detail later.

The virtual sensor DB 5 stores information to be used for implementing the virtual sensor. The virtual sensor DB 5 includes the virtual sensor class library 54. The virtual sensor class library 54 manages multiple classes that are abstractions of the virtual sensor. A virtual sensor instance (an object or an entity) is generated based on a relevant class.

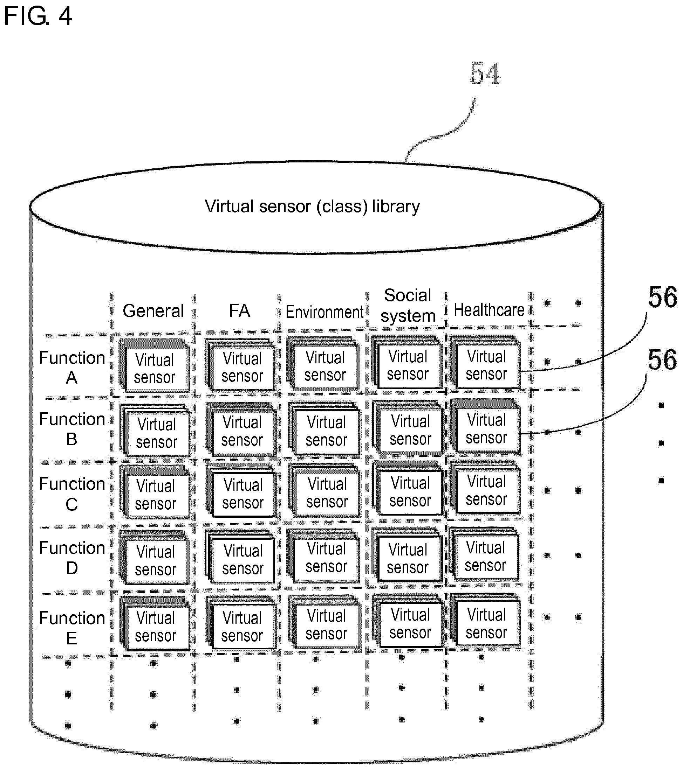

Fig. 4 is a diagram of an example of the virtual sensor class library 54. As shown in Fig. 4, the virtual sensor class library 54 manages multiple classes. The classes are organized by functions and fields. The functions include, for example, functions A, B, C, D, and E. The fields include general, FA, environment, social system, and healthcare.

### 2-2. Functional Configuration of Second Server

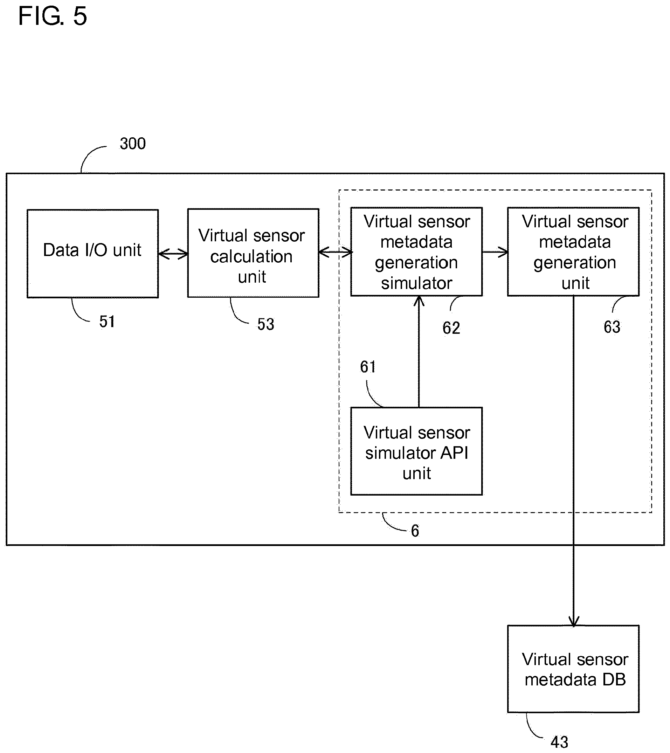

Fig. 5 is a diagram of the control unit 300 showing its example functional configuration. The control unit 300 expands the program (including the virtual sensor simulator program 60) stored in the storage 400 into the RAM 320. The CPU 310 in the control unit 300 then interprets and executes the program expanded in the RAM 320 to control each unit. As shown in Fig. 5, the control unit 300 thus operates as a data input-output (I/O) unit 51, a virtual sensor calculation unit 53, and the virtual sensor simulator 6.

For example, the data I/O unit 51 receives sensing data input from one or more real sensors 10, and outputs sensing data for a virtual sensor generated by the virtual sensor calculation unit 53 to an external device.

For example, the virtual sensor calculation unit 53 is capable of executing a virtual sensor function associated with each virtual sensor class, and calculates sensing data for a virtual sensor using sensing data input from one or more real sensors 10 through the data I/O unit 51.

The virtual sensor simulator 6 is a functional module implementable by the virtual sensor simulator program 60, and includes a virtual sensor simulator application programming interface (API) unit 61, a virtual sensor metadata generation simulator 62, and a virtual sensor metadata generation unit 63. The virtual sensor simulator 6 simulates a virtual sensor before the virtual sensor is actually created.

The virtual sensor simulator API unit 61 selects one or more input sensors (real sensors 10) in response to an instruction from the virtual sensor definer.

In the present embodiment, as described above, metadata about a virtual sensor is tentatively input by the virtual sensor definer in simulating the virtual sensor. The virtual sensor metadata generation simulator 62 determines whether the tentatively input metadata is consistent with metadata about each input sensor. The virtual sensor metadata generation simulator 62 will be described in detail later.

The virtual sensor metadata generation unit 63 generates metadata about the virtual sensor based on the simulation result, and transmits the generated metadata to (enters the metadata into) the virtual sensor metadata DB 43.

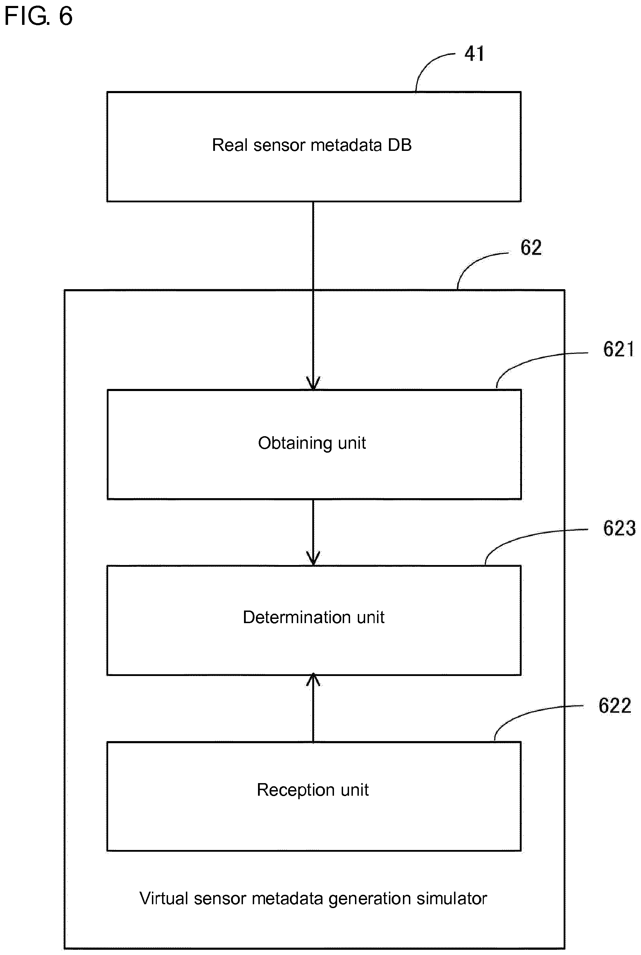

Fig. 6 is a diagram of the virtual sensor metadata generation simulator 62 showing its example detailed functional configuration. As shown in Fig. 6, the virtual sensor metadata generation simulator 62 includes an obtaining unit 621, a reception unit 622, and a determination unit 623.

The obtaining unit 621 obtains metadata about each input sensor from the real sensor metadata DB 41. The reception unit 622 receives metadata about the virtual sensor tentatively input by the virtual sensor definer. The determination unit 623 determines whether metadata about each real sensor 10 obtained by the obtaining unit 621 is consistent with the metadata about the virtual sensor tentatively input through the reception unit 622.

### 3. Operation Example

### 3-1. Operation Procedure for Virtual Sensor Definer

To newly create a virtual sensor, the virtual sensor definer accesses the second server 7 through a user terminal (not shown), such as a smartphone, a personal computer (PC), or a tablet. This causes a screen received from the second server 7 to appear on the monitor of the user terminal.

For example, a screen for selecting a virtual sensor class appears on the monitor of the user terminal. For example, a graphical user interface (GUI) shown in Fig. 4 appears on the monitor of the user terminal. The GUI includes multiple selection buttons 56. Each selection button 56 corresponds to a virtual sensor class. The user presses a selection button 56 corresponding to the class of a virtual sensor to be generated.

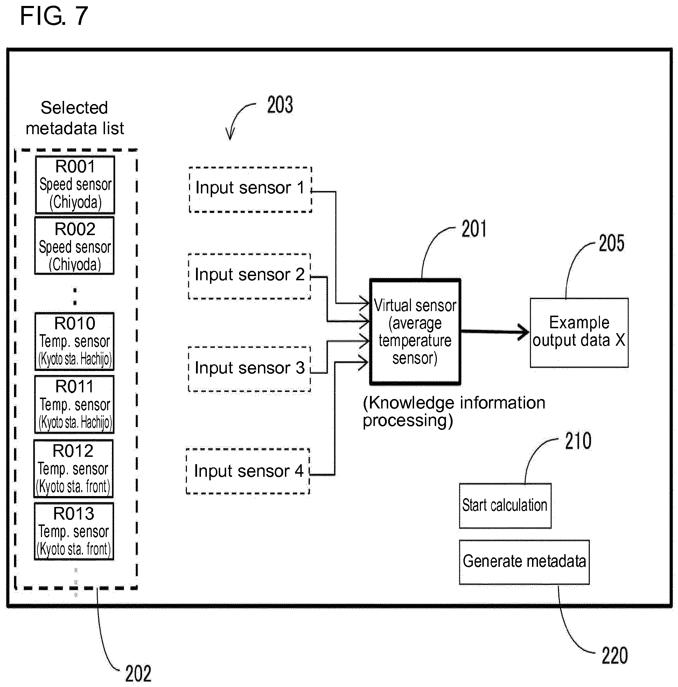

Fig. 7 is a diagram showing an example screen to appear on the user terminal monitor after a virtual sensor class is selected. In this example, an average temperature sensor is selected as a virtual sensor class. The average temperature sensor as a virtual sensor outputs sensing data indicating an average of multiple temperatures measured by multiple real sensors 10.

As shown in Fig. 7, a description field 201 shows the selected class corresponding to an average temperature sensor. A display field 202 lists multiple candidate input sensors (real sensors 10) for the average temperature sensor as a selected metadata list.

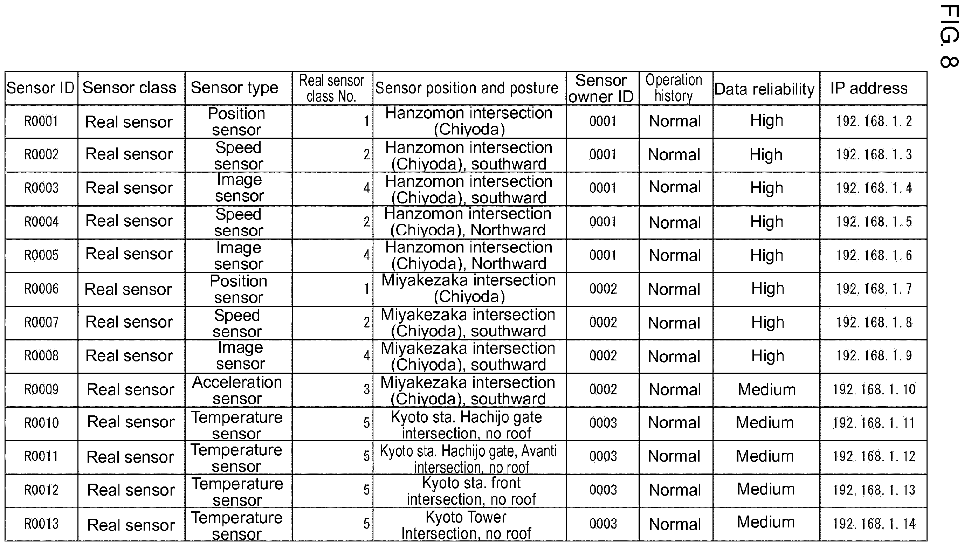

Fig. 8 is a diagram of an example data map of the real sensor metadata DB 41 (Fig. 1). As shown in Fig. 8, the real sensor metadata DB 41 manages metadata about each registered real sensor 10. The metadata includes, for example, a sensor ID, a sensor class, a sensor type, a real sensor class number, a sensor position and posture, a sensor owner ID, an operation history, data reliability, and an IP address. The display field 202 shows some or all of multiple real sensors 10 stored in the real sensor metadata DB 41.

Referring back to Fig. 7, an input field 203 shows information about each real sensor 10 selected by the definer from the candidate input sensors (real sensors 10) included in the selected metadata list. A display field 205 shows an example output to be generated when a virtual sensor in the description field 201 receives sensing data from multiple real sensors 10 appearing in the input field 203. A calculation start button 210 receives an instruction to start simulating a virtual sensor. A metadata generation button 220 receives an instruction to generate virtual sensor metadata.

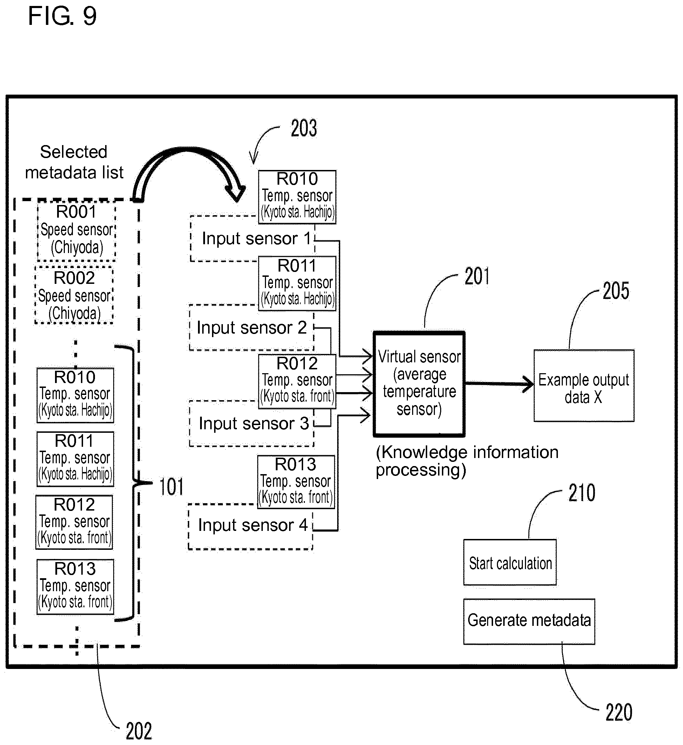

Fig. 9 is a diagram showing an example screen for selecting input sensors. As shown in Fig. 9, for example, four real sensors 10 (temperature sensors R010, R011, R012, and R013) indicated by a section 101 are selected as input sensors.

The four real sensors 10 selected as input sensors also appear in the input field 203. The temperature sensors R010, R011, R012, and R013 are all installed around Kyoto station. A virtual sensor connected with the temperature sensors R010, R011, R012, and R013 as input sensors (a virtual sensor appearing in the description field 201) is created as an average temperature sensor around Kyoto station.

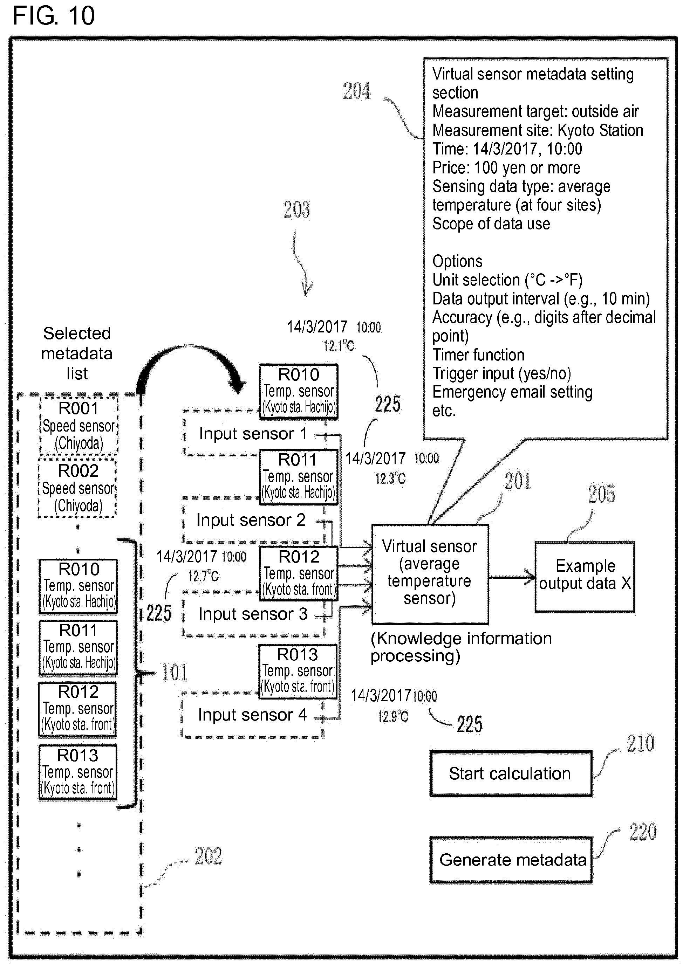

Fig. 10 is an example diagram showing a screen to appear on the user terminal monitor after input sensors are selected. As shown in Fig. 10, representative data 225 appears near each selected input sensor. In this example, the representative data 225 includes temperature (sensing data) and measurement time (date and time) (metadata). For example, the virtual sensor definer refers to the screen described above to determine that the temperature was measured by the temperature sensor R010 on March 14, 2017, and was 12.1 °C.

The screen also includes a setting field 204. The setting field 204 receives tentatively input virtual sensor metadata and option settings from the user.

In this example, the setting field 204 includes a virtual sensor metadata setting section and the options. Examples of items in the virtual sensor metadata setting section include a measurement target, a measurement site, time, a price, and a sensing data type. Examples of the options include data unit selection, data output intervals, accuracy, timer function, trigger input (yes/no), and emergency email setting. In the present embodiment, as described above, items for tentatively inputting metadata about the virtual sensor are predefined (appearing on the screen), thus facilitating the virtual sensor definer to tentatively input metadata.

The virtual sensor metadata setting section and the options include items preliminarily provided for each class. For a class selected by the virtual sensor definer, relevant items appear on the screen.

In addition, the virtual sensor definer may tentatively input each metadata piece in the virtual sensor metadata setting section. After tentatively inputting metadata, the virtual sensor definer can press the calculation start button 210.

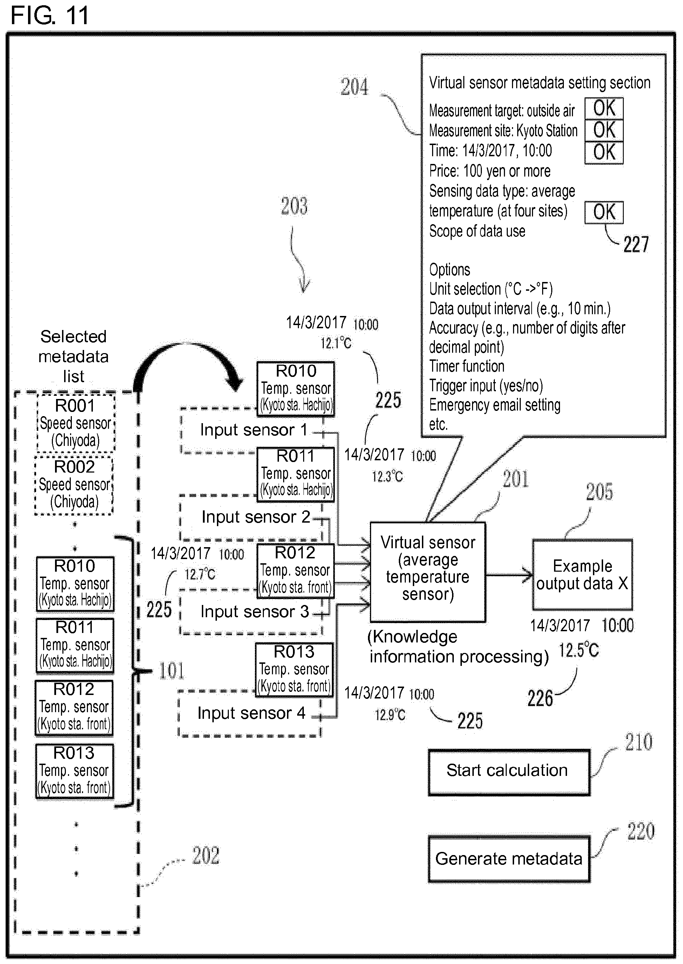

Fig. 11 is a diagram showing an example screen to appear on the user terminal monitor after the calculation start button 210 is pressed. Pressing the calculation start button 210 starts the simulation of a virtual sensor. More specifically, sensing data for the virtual sensor is calculated, and used to determine whether the metadata tentatively input for the virtual sensor is consistent with metadata about input sensors (real sensors 10).

As shown in Fig. 11, sensing data for the virtual sensor is calculated. The calculation result (representative data 226) then appears near the display field 205. In this example, the measurement time (date and time) is 10:00, March 14, 2017, and the temperature is 12.5 °C.

A determination result icon 227 indicating the result of the determination as to whether the tentatively input metadata about the virtual sensor is consistent with metadata about the input sensors appears in the setting field 204. Items without inconsistency (in other words, consistent items) are labeled with OK, whereas items with inconsistency (in other words, inconsistent items) are labeled with Error.

In this example, the temperature sensors R010, R011, R012, and R013 each measure outside air temperature around Kyoto station at 10:00 on March 14, 2017. The items are thus labeled with OK. For measurement sites, for example, Kyoto station Hachijo gate and Kyoto station front both include Kyoto station as a common keyword. Setting the metadata indicating Kyoto station thus causes no inconsistency. For example, when metadata tentatively input for a virtual sensor indicates Osaka station as the measurement site for the virtual sensor in this example, where Kyoto station Hachijo gate and Kyoto station front are the measurement sites for the input sensors, the metadata about the input sensors is inconsistent with the metadata about the virtual sensor. In this case, the determination result icon 227 shows Error.

After simulating the virtual sensor is complete, the virtual sensor definer can set, for example, options for the virtual sensor. For example, the definer may select the data unit for sensing data. Such option settings may be eliminated.

Subsequently, the metadata generation button 220 is pressed to actually create the simulated virtual sensor. The metadata about the virtual sensor is then entered into the virtual sensor metadata DB 43 (Fig. 1), and information about the instance is entered into the virtual sensor instance table 44 (Fig. 1).

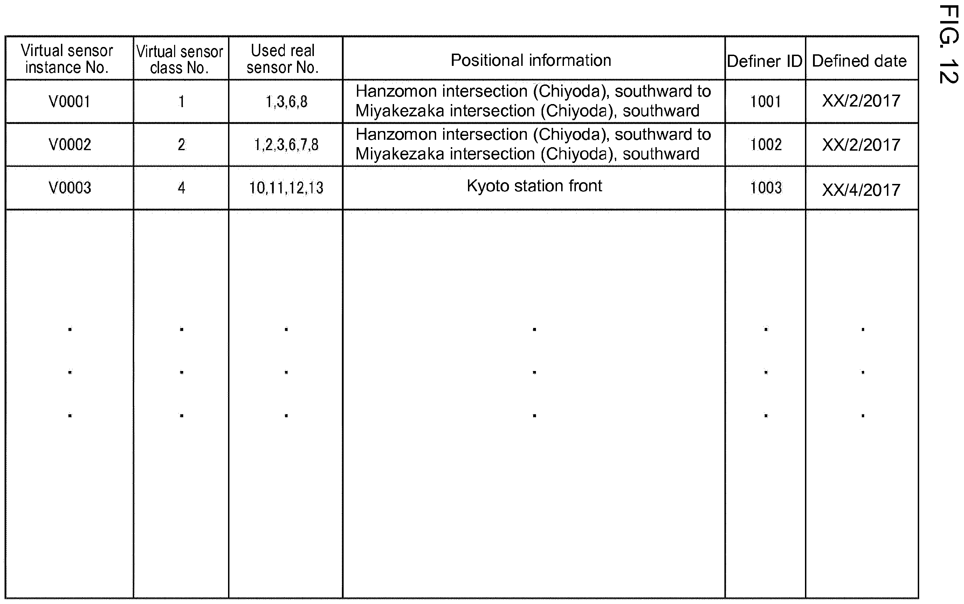

Fig. 12 is a diagram showing an example of the virtual sensor instance table 44. As shown in Fig. 12, the virtual sensor instance table 44 manages information about virtual sensor instances (objects or entities). The virtual sensor instance table 44 manages, for example, a virtual sensor instance number, a virtual sensor class number, a used real sensor number, positional information, a definer ID, and a defined date for each instance.

In the present embodiment, as described above, the second server 7 determines, in simulating virtual sensor metadata, the consistency between metadata (first metadata) tentatively input by the virtual sensor definer and metadata (second metadata) about input sensors (real sensors 10). The virtual sensor simulator 6 then generates final metadata based on the determination result. The second server 7 thus generates metadata about the virtual sensor consistent with metadata about the input sensors.

### 3-2. Specific Procedure

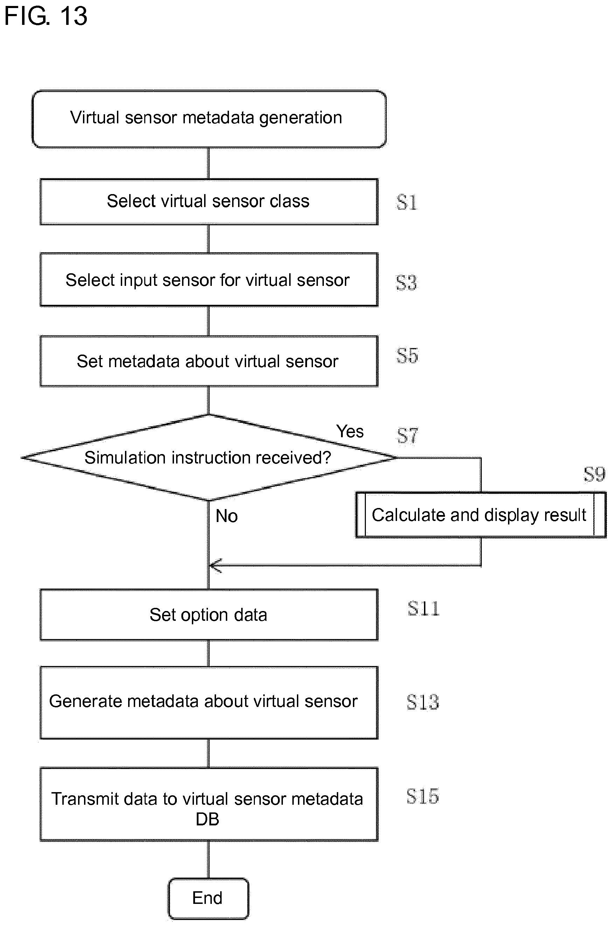

Fig. 13 is a flowchart showing a specific procedure for simulating metadata. The processing illustrated in this flowchart is performed by the control unit 300 (virtual sensor simulator 6) in response to instructions from the virtual sensor definer.

As shown in Fig. 13, the definer selects a virtual sensor class (Fig. 4), and the control unit 300 selects the virtual sensor class based on the selection of the definer (step S1, Fig. 7). The definer selects input sensors for a virtual sensor, and the control unit 300 selects the input sensors based on the selection of the definer (step S3, Fig. 9). The definer tentatively inputs metadata about the virtual sensor, and the control unit 300 tentatively sets metadata about the virtual sensor based on the tentatively input metadata from the definer (step S5, Fig. 11).

Subsequently, the control unit 300 determines whether a simulation instruction is received (or whether the calculation start button 210 in Fig. 11 is pressed) (step S7). When determining that a simulation instruction is received (Yes in step S7), the control unit 300 performs calculations for the simulation and displays the calculation result (step S9). In other words, the control unit 300 determines whether metadata tentatively input for the virtual sensor is consistent with metadata about the input sensors, and outputs the determination result. The processing in step S9 will be described in detail later.

When determining that the simulation in step S9 is complete, or that no simulation instruction is received (No in step S7), the control unit 300 sets option data for the virtual sensor in accordance with the settings by the definer (step S11).

Subsequently, when the definer presses the metadata generation button 220 (Fig. 11), the control unit 300 generates metadata about the simulated virtual sensor (virtual sensor metadata) (step S13), and controls the communication I/F 510 to transmit the generated metadata to the virtual sensor metadata DB 43 (step S15). The control unit 300 transmits the metadata about the virtual sensor together with identification information indicating that the metadata is metadata about the virtual sensor to the virtual sensor metadata DB 43.

In the present embodiment, as described above, the metadata once generated about the virtual sensor is entered into the virtual sensor metadata DB 43. This facilitates subsequent selection of the virtual sensor associated with the metadata.

Also, the metadata to be entered into the virtual sensor metadata DB 43 has identification information (identification information indicating that the metadata is not metadata about a real sensor but is metadata about a virtual sensor). This allows easy differentiation between metadata about a virtual sensor and metadata about a real sensor 10.

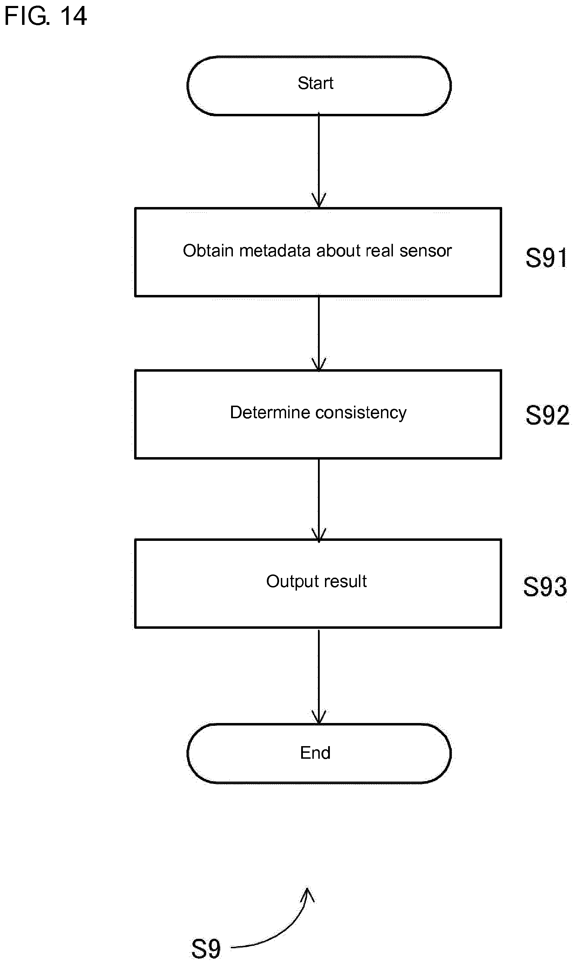

Fig. 14 is a flowchart showing a specific procedure in step S9 in Fig. 13. As shown in Fig. 14, the control unit 300 obtains metadata about one or more input sensors (real sensors 10) from the real sensor metadata DB 41 (step S91).

Subsequently, the control unit 300 determines the consistency between the metadata tentatively input for the virtual sensor and the obtained metadata about the input sensors (step S92). The control unit 300 outputs the determination result (step S93).

### 4. Features

As described above, the second server 7 according to the present embodiment determines, in simulating metadata about the virtual sensor, the consistency between metadata (first metadata) tentatively input from the virtual sensor definer and metadata (second metadata) about one or more real sensors 10 that each output sensing data to the virtual sensor. The virtual sensor simulator 6 then generates final metadata based on the determination result. The second server 7 thus generates metadata about the virtual sensor consistent with metadata about the input sensors.

### 5. Modifications

### 5-1.

In the above embodiment, metadata about the virtual sensor is first simulated, and then the definer presses the metadata generation button 220 to generate metadata about the virtual sensor. However, metadata about a virtual sensor may be generated upon being triggered in a different manner. For example, metadata about a virtual sensor may be generated when a determination result after the simulation is affirmative, rather than when the metadata generation button 220 is pressed.

### 5-2.

In the above embodiment, metadata can be generated in response to the metadata generation button 220 being pressed by the definer although the determination result in simulating metadata about the virtual sensor is negative. In some embodiments, the metadata generation button 220 may be disabled from being pressed when the determination result obtained in the simulation is negative. In some embodiments, when the determination result in the simulation is negative, candidates for correcting the metadata may be output on the screen, or a display simply prompting correction of the metadata may be output on the screen. When the real sensor metadata DB 41 stores no real sensor 10 having metadata consistent with tentatively input metadata, a notification indicating no consistent metadata may be output on the screen.

### 5-3.

Although the first server 4 and the second server 7 are separate servers in the above embodiment, a single server may be used to implement the same functions as achieved by both the first server 4 and the second server 7.

### 5-4.

Although the second server 7 simulates the virtual sensor in the above embodiment, the simulation may be performed by another unit. For example, a program for simulating a virtual sensor may be installed on the application server 2 to simulate the virtual sensor.

### 5-5.

In the above embodiment, the second server 7 transmits metadata about the virtual sensor together with identification information indicating that the metadata is metadata about the virtual sensor to the virtual sensor metadata DB 43. However, the identification information is not limited to the information in the above embodiment. For example, the second server 7 may generate metadata about sensing data for a virtual sensor, and transmit the metadata together with identification information indicating that the metadata is metadata about the sensing data by the virtual sensor to the virtual sensor metadata DB 43.

### REFERENCE SIGNS LIST

- 1: sensor network unit
- 2: application server
- 3: management system
- 4: first server
- 5: virtual sensor DB
- 6: virtual sensor simulator
- 7: second server
- 10: real sensor
- 11: sensor network adapter
- 40: metadata matching unit
- 41: real sensor metadata DB
- 42: application metadata DB
- 43: virtual sensor metadata DB
- 44: virtual sensor instance table
- 51: data I/O unit
- 52: virtual sensor function
- 53: virtual sensor calculation unit
- 54: virtual sensor class library
- 56: selection button
- 61: virtual sensor simulator API unit
- 62: virtual sensor metadata generation simulator
- 63: virtual sensor metadata generation unit
- 90: Internet
- 100: sensor network system
- 101: brace
- 201: description field
- 202, 205: display field
- 203: input field
- 204: setting field
- 210: calculation start button
- 220: metadata generation button
- 225, 226: representative data
- 227: determination result icon
- 300: control unit
- 310: CPU
- 320: RAM
- 330: ROM
- 350: bus
- 400: storage
- 510: communication l/F
- 621: obtaining unit
- 622: reception unit
- 623: determination unit

## Claims

1. A data generation apparatus for generating first metadata to be associated with a virtual sensor,
the virtual sensor being configured to receive input sensing data obtained by a real sensor sensing a target and to output new sensing data, the data generation apparatus comprising:
an obtaining unit (621) configured to obtain second metadata about the real sensor;
a reception unit (622) configured to receive tentatively input first metadata from a user;
a determination unit (623) configured to determine consistency between the first metadata tentatively input through the reception unit (622) and the second metadata obtained by the obtaining unit (621); and
a generation unit configured to generate final first metadata based on a determination result obtained by the determination unit (623).

2. The data generation apparatus according to claim 1, wherein
the reception unit (622) is configured to receive information for a predefined input item to receive the tentatively input first metadata.

3. The data generation apparatus according to claim 2, further comprising:
an output unit configured to output a screen to receive the tentatively input first metadata,
wherein the screen includes the input item.

4. The data generation apparatus according to any one of claims 1 to 3, further comprising:
a transmission unit configured to transmit data to an external device located external to the data generation apparatus,
wherein the external device is configured to store the second metadata,
the transmission unit transmits the first metadata generated by the generation unit to the external device, and
the external device is configured to receive and store the first metadata.

5. The data generation apparatus according to claim 4, wherein
the first metadata transmitted by the transmission unit has identification information indicating that the first metadata is metadata about the virtual sensor.

6. The data generation apparatus according to claim 4, wherein
the first metadata transmitted by the transmission unit has identification information indicating that the first metadata is metadata about sensing data output by the virtual sensor.

7. A data generation method for generating first metadata to be associated with a virtual sensor,
the virtual sensor being configured to receive input sensing data obtained by a real sensor sensing a target and to output new sensing data,
the method comprising:
obtaining, by an obtaining unit (621), second metadata about the real sensor;
receiving, by a reception unit (622), tentatively input first metadata from a user;
determining, by a determination unit (623), consistency between the tentatively input first metadata and the obtained second metadata; and
generating, by a generation unit, final first metadata based on a determination result obtained in determining the consistency.

8. A program causing a computer to generate first metadata to be associated with a virtual sensor,
the virtual sensor being configured to receive input sensing data obtained by a real sensor sensing a target and to output new sensing data,
the program causing the computer to implement:
obtaining second metadata about the real sensor;
receiving tentatively input first metadata from a user;
determining consistency between the tentatively input first metadata and the obtained second metadata; and
generating final first metadata based on a determination result obtained in determining the consistency.

## Patentansprüche

1. Datenerzeugungseinrichtung zum Erzeugen von ersten Metadaten, die mit einem virtuellen Sensor zu verknüpfen sind,
wobei der virtuelle Sensor konfiguriert ist, um eingegebene Abtastdaten zu empfangen, die von einem echten Sensor erhalten werden, der ein Ziel abtastet, und neue Abtastdaten auszugeben, wobei die Datenerzeugungseinrichtung umfasst:
eine Erhaltungseinheit (621), die konfiguriert ist, um zweite Metadaten bezüglich des echten Sensors zu erhalten;
eine Empfangseinheit (622), die konfiguriert ist, um vorläufig eingegebene erste Metadaten von einem Benutzer zu empfangen;
eine Bestimmungseinheit (623), die konfiguriert ist, um Konsistenz zwischen den ersten Metadaten, die vorläufig durch die Empfangseinheit (622) eingegeben werden, und den zweiten Metadaten, die von der Erhaltungseinheit (621) erhalten werden, zu bestimmen; und
eine Erzeugungseinheit, die konfiguriert ist, um endgültige erste Metadaten auf Grundlage eines Bestimmungsergebnisses zu erzeugen, das von der Bestimmungseinheit (623) erhalten wird.

2. Datenerzeugungseinrichtung nach Anspruch 1, wobei
die Empfangseinheit (622) konfiguriert ist, um Informationen für ein vorab definiertes eingegebenes Element zu empfangen, um die vorläufig eingegebenen ersten Metadaten zu empfangen.

3. Datenerzeugungseinrichtung nach Anspruch 2, weiter umfassend:
eine Ausgabeeinheit, die konfiguriert ist, um einen Bildschirm auszugeben, um die vorläufig eingegebenen ersten Metadaten zu empfangen,
wobei der Bildschirm das eingegebene Element beinhaltet.

4. Datenerzeugungseinrichtung nach einem der Ansprüche 1 bis 3, weiter umfassend:
eine Sendeeinheit, die konfiguriert ist, um Daten an eine externe Vorrichtung zu senden, die sich extern zu der Datenerzeugungseinrichtung befindet,
wobei die externe Vorrichtung konfiguriert ist, um die zweiten Metadaten zu speichern,
die Sendeeinheit die ersten Metadaten, die von der Erzeugungseinheit erzeugt werden, an die externe Vorrichtung sendet, und
die externe Vorrichtung konfiguriert ist, um die ersten Metadaten zu empfangen und zu speichern.

5. Datenerzeugungseinrichtung nach Anspruch 4, wobei
die ersten Metadaten, die von der Sendeeinheit gesendet werden, Identifikationsinformationen aufweisen, die angeben, dass die ersten Metadaten Metadaten bezüglich des virtuellen Sensors sind.

6. Datenerzeugungseinrichtung nach Anspruch 4, wobei
die ersten Metadaten, die von der Sendeeinheit gesendet werden, Identifikationsinformationen aufweisen, die angeben, dass die ersten Metadaten Metadaten bezüglich Abtastdaten sind, die von dem virtuellen Sensor ausgegeben werden.

7. Datenerzeugungsverfahren zum Erzeugen von ersten Metadaten, die mit einem virtuellen Sensor zu verknüpfen sind,
wobei der virtuelle Sensor konfiguriert ist, um eingegebene Abtastdaten zu empfangen, die von einem echten Sensor erhalten werden, der ein Ziel abtastet, und neue Abtastdaten auszugeben,
wobei das Verfahren umfasst:
Erhalten, von einer Erhaltungseinheit (621), von zweiten Metadaten bezüglich des echten Sensors;
Empfangen, von einer Empfangseinheit (622), von vorläufig eingegebenen ersten Metadaten von einem Benutzer;
Bestimmen, von einer Bestimmungseinheit (623), von Konsistenz zwischen den vorläufig eingegebenen ersten Metadaten und den erhaltenen zweiten Metadaten; und
Erzeugen, von einer Erzeugungseinheit, von endgültigen ersten Metadaten auf Grundlage eines Bestimmungsergebnisses, das beim Bestimmen der Konsistenz erhalten wird.

8. Programm, das einen Computer veranlasst, erste Metadaten zu erzeugen, die mit einem virtuellen Sensor zu verknüpfen sind,
wobei der virtuelle Sensor konfiguriert ist, um eingegebene Abtastdaten zu empfangen, die von einem echten Sensor erhalten werden, der ein Ziel abtastet, und neue Abtastdaten auszugeben,
wobei das Programm den Computer veranlasst, zu implementieren:
Erhalten von zweiten Metadaten bezüglich des echten Sensors;
Empfangen von vorläufig eingegebenen ersten Metadaten von einem Benutzer;
Bestimmen von Konsistenz zwischen den vorläufig eingegebenen ersten Metadaten und den erhaltenen zweiten Metadaten; und
Erzeugen von endgültigen ersten Metadaten auf Grundlage eines Bestimmungsergebnisses, das beim Bestimmen der Konsistenz erhalten wird.

## Revendications

1. Appareil de génération de données destiné à générer des premières métadonnées devant être associées à un capteur virtuel,
le capteur virtuel étant configuré pour recevoir des données de détection d'entrée obtenues par un capteur réel détectant une cible et pour produire en sortie de nouvelles données de détection, l'appareil de génération de données comprenant :
une unité d'obtention (621) configurée pour obtenir des secondes métadonnées concernant le capteur réel ;
une unité de réception (622) configurée pour recevoir des premières métadonnées entrées temporairement à partir d'un utilisateur ;
une unité de détermination (623) configurée pour déterminer une cohérence entre les premières métadonnées entrées temporairement par le biais de l'unité de réception (622) et les secondes métadonnées obtenues par l'unité d'obtention (621) ; et
une unité de génération configurée pour générer des premières métadonnées finales sur la base d'un résultat de détermination obtenu par l'unité de détermination (623).

2. Appareil de génération de données selon la revendication 1, dans lequel
l'unité de réception (622) est configurée pour recevoir des informations pour un élément d'entrée prédéfini pour recevoir les premières métadonnées entrées temporairement.

3. Appareil de génération de données selon la revendication 2, comprenant en outre :
une unité de sortie configurée pour produire en sortie un écran pour recevoir les premières métadonnées entrées temporairement,
dans lequel l'écran inclut l'élément d'entrée.

4. Appareil de génération de données selon l'une quelconque des revendications 1 à 3, comprenant en outre :
une unité de transmission configurée pour transmettre des données à un dispositif externe situé à l'extérieur de l'appareil de génération de données,
dans lequel le dispositif externe est configuré pour stocker les secondes métadonnées,
l'unité de transmission transmet les premières métadonnées générées par l'unité de génération au dispositif externe, et
le dispositif externe est configuré pour recevoir et stocker les premières métadonnées.

5. Appareil de génération de données selon la revendication 4, dans lequel
les premières métadonnées transmises par l'unité de transmission présentent des informations d'identification indiquant que les premières métadonnées sont des métadonnées concernant le capteur virtuel.

6. Appareil de génération de données selon la revendication 4, dans lequel
les premières métadonnées transmises par l'unité de transmission présentent des informations d'identification indiquant que les premières métadonnées sont des métadonnées concernant des données de détection produites en sortie par le capteur virtuel.

7. Procédé de génération de données destiné à générer des premières métadonnées devant être associées à un capteur virtuel,
le capteur virtuel étant configuré pour recevoir des données de détection d'entrée obtenues par un capteur réel détectant une cible et pour produire en sortie de nouvelles données de détection,
le procédé comprenant :
une obtention, par une unité d'obtention (621), de secondes métadonnées concernant le capteur réel ;
une réception, par une unité de réception (622), de premières métadonnées entrées temporairement à partir d'un utilisateur ;
une détermination, par une unité de détermination (623), d'une cohérence entre les premières métadonnées entrées temporairement et les secondes métadonnées obtenues ; et
une génération, par une unité de génération, de premières métadonnées finales sur la base d'un résultat de détermination obtenu en déterminant la cohérence.

8. Programme amenant un ordinateur à générer des premières métadonnées devant être associées à un capteur virtuel,
le capteur virtuel étant configuré pour recevoir des données de détection d'entrée obtenues par un capteur réel détectant une cible et pour produire en sortie de nouvelles données de détection,
le programme amenant l'ordinateur à mettre en œuvre :
une obtention de secondes métadonnées concernant le capteur réel ;
une réception de premières métadonnées entrées temporairement à partir d'un utilisateur ;
une détermination d'une cohérence entre les premières métadonnées entrées temporairement et les secondes métadonnées obtenues ; et
une génération de premières métadonnées finales sur la base d'un résultat de détermination obtenu en déterminant la cohérence.
